# EUROPÄISCHE PATENTANMELDUNG

(11) **EP 0 699 567 A1**
(43) Veröffentlichungstag der Anmeldung: **06.03.1996**
(21) Anmeldenummer: 95810541.3
(22) Anmeldetag: 01.09.1995
(51) Int. Cl.: B60T 7/12

(54) **Entgleisungsdetektorsystem mit Schnellbremsauslösung**

(30) Priorität: 02.09.1994 CH 2683/94
(71) Anmelder: Müller, Johannes, CH-8052 Zürich (CH)
(72) Erfinder: Müller, Johannes, CH-8052 Zürich (CH)

(57) **Zusammenfassung**

Die Sicherheitsvorrichtung bei Entgleisung von Eisenbahnwagen mit automatischer Auslösung einer Schnellbremsung umfasst als wesentliche Komponenten einen Schocksensor (1-4), einen Auslösemechanismus (5-7) und eine Schnellbremsvorrichtung (9-12). Die einzelnen Komponenten sind konstruktiv und funktionell je selbständig; sie sind untereinander derart gekoppelt, dass der Schocksensor den Auslösemechanismus und dieser wiederum die Schnellbremsvorrichtung beeinflusst, dass eine Beeinflussung in der Gegenrichtung (Rückkoppelung) aber nicht stattfinden kann. Alle Komponenten arbeiten rein mechanisch, eine Mitwirkung der Bremsdruckluft ist für das Funktionieren der Vorrichtung selbst nicht erforderlich. Wenn der Gewichtskörper (1) die Festhalte-Vorrichtung (2-4) überwunden hat, fällt er auf den Auslösehebel (5). Dieser zieht den Sperriegel (6) aus der Sperrlage heraus und gibt damit die unter Federspannung (11) stehende Ventilstange (12) frei, das Druckluftventil (9) für die Bremsdruckluft öffnet und bleibt bis zur manuellen Rückstellung offen.

## Beschreibung

Als Sicherheitsvorrichtung bei Entgleisung von Eisenbahnwagen sind vollmechanische Entgleisungs-Detektoren mit automatischer Auslösung einer Schnellbremsung (Notbremsung) in verschiedenen Varianten bekannt. Allen bisher bekannten Varianten gemeinsam ist, dass die Sicherheitsvorrichtung durch einen konstruktiven Eingriff am Wagen fest mit diesem und mit der Hauptbremsleitung des Zuges zu verbinden ist.

Um eine Entgleisung festzustellen, benützen die meisten bekannten Vorrichtungen *Lage-Sensoren* auf, über oder neben der Schiene. Im Entgleisungsfalle wird der Fühler von der Schiene mechanisch aus der Ruhelage weggedrückt; diese Kraft wird dann für das Oeffnen der Bremsleitung verwendet. Vorrichtungen, die mit Lage-Sensoren arbeiten, haben den Nachteil, dass sie verhältnismässig aufwendige Installationsarbeiten am betreffenden Wagen verlangen. Ein anderes bekanntes und auch in der nachstehend beschriebenen Erfindung verwendetes Detektionsprinzip beruht auf dem Gesetz der trägen Masse. Ein in vertikaler Richtung verschiebbarer Gewichtskörper arbeitet als *Trägheits-Sensor* (Schock-Sensor) und überwacht die während der Fahrt auftretenden, vertikal auf den Wagen einwirkenden Stösse. Bei den normalen Erschütterungen des Fahrbetriebs bleibt der Sensor inaktiv, bei aussergewöhnlich starken Vertikalstössen aber, wie sie bei der Entgleisung eines fahrenden Wagens durch das Aufstossen der Räder auf den Schwellen auftreten, spricht er an. Zum Oeffnen der Druckluft-Hauptbremsleitung wird dann direkt oder indirekt die Bewegungsenergie des Gewichtskörpers benutzt.

Wird die Hauptbremsleitung des Zuges geöffnet, so kann die Bremsdruckluft in die umgebende Atmosphäre entweichen; durch den Druckabfall werden an allen Wagen des Zuges die Radbremsen aktiviert, um den Zug zu bremsen. Im Gegensatz zum normalen *Betriebsbremsventil* auf dem Führerstand, das einen fein dosierten, regulierbaren Druckabbau in der Hauptbremsleitung des Zuges ermöglichen muss, ist für den Einsatz in einer Sicherheitseinrichtung der genannten Art ein ungeregeltes *Schnellbremsventil* zweckmässig, das nur entweder geschlossen oder aber offen ist und in der Oeffnungslage einen möglichst schnellen und vollständigen Luftablass zu gewährleisten hat.

Eine bereits bekannte, nach dem Prinzip der trägen Masse arbeitende Sicherheitseinrichtung zeigt zum Beispiel die deutsche Offenlegungsschrift 1 455 229. In Fig. 5 derselben ist ein Schocksensor dargestellt in Form eines Gewichtskörpers mit einem obenliegenden Fortsatz; der Gewichtskörper kann sich in einem vertikal angeordneten, zylindrischen Gehäuse axial längs der Wandung des inneren Hohlraumes bewegen. Der Gewichtskörper wird durch eine direkt auf ihn wirkende Rückhaltefeder in einer unteren Ruhelage festgehalten. Wird er durch einen plötzlichen Stoss nach oben bewegt, so dringt unten Druckluft von der Hauptbremsleitung her ein und wirkt als pneumatische Servounterstützung für die Aufwärtsbewegung des Gewichtskörpers. Die Sicherheitseinrichtung nach DE 1 455 229 weist konstruktive Eigenheiten auf, die hier zur Abgrenzung gegenüber der neuen Erfindung kurz erwähnt seien.

Zum einen sind im Zusammenspiel der einzelnen Komponenten (Schocksensor, Uebertragungsvorrichtung und Luftablassventil) wichtige Eigenheiten festzustellen. Der Gewichtskörper, dessen integrierter Fortsatz und, zumindest solange das Luftablassventil offen ist, auch dieses sind mechanisch *direkt gekoppelt*; sie bewegen sich miteinander aufwärts und auch wieder abwärts. Dies führt zu einer Koppelung in zwei Richtungen: vorwärts und rückwärts. Nicht nur kann der Gewichtskörper mit seinem Fortsatz das Luftablassventil aufstossen (Vorwärtskoppelung), dieses kann ebenso durch die auf es einwirkenden mechanischen und pneumatischen Kräfte über den Fortsatz auf den Gewichtskörper einwirken und diesen in Richtung Ruhelage zurückstossen (Rückwärtskoppelung); die entgegengesetzt wirkenden Kräfte können sich allenfalls gegegenseitig aufheben. Nebst der mechanischen besteht zudem eine pneumatische Abhängigkeit: Je stärker die Servounterstützung wirkt, umso wirksamer ist der Druckabbau; je mehr als Folge davon der Druck in der Hauptbremsleitung sinkt, umso geringer wird aber die Kraft der Servounterstützung.

Ein anderer Aspekt ist das dynamische Verhalten der Komponenten Gewichtskörper und Luftablassventil. Gewichtskörper (mitsamt Fortsatz) und Luftablassventil sind monostabil gelagert. Sie haben aufgrund der *direkt wirkenden* Federn (Rückhaltefeder des Gewichtskörpers, Schliessfeder des Luftablassventils) nur eine einzige stabile Lage, die Ruhelage. Wirken Gegenkräfte auf ein derart gelagertes Bauteil ein, so bewegt es sich aus der Ruhelage bis zu jener Position, an der sich ein labiles Gleichgewicht der Kräfte einstellt; ändert die Stärke der Gegenkräfte, ändert sich auch die Lage des Bauteils, hört die Gegenkraft auf, fällt das Bauteil in seine Ruhelage zurück. Weil Gewichtskörper und Luftauslassventil innerhalb des gesamten Bewegungsbereiches analog zu den einwirkenden Kräften ihre Position stetig verändern, kann die Konstruktion nach DE 1 455 229 als System mit «*analogem*» *Verhalten* bezeichnet werden, im Gegensatz zu Systemen mit «*digitalem*» *Verhalten*, bei denen es nur eine «Ein-» und eine «Aus-Position» gibt.

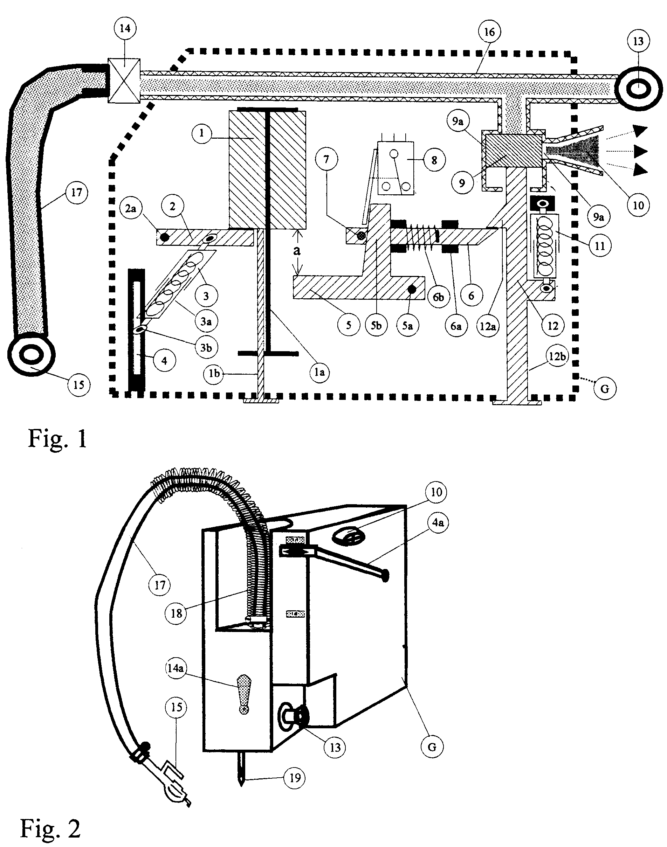

Als dritter Aspekt sei das funktionale Verhalten betrachtet: Im Falle der Ausführungsformen gemäss den Figuren 3 und 5 von DE 1 455 229 vermindert sich die Bremstätigkeit der Vorrichtung stetig, je mehr der Druck in der Hauptbremsleitung sinkt; hat der Druck eine gewisse untere Grenze erreicht, schliesst das Luftablassventil und die Bremswirkung hört auf. Diese Ausführungsformen funktionieren mit andern Worten *selbsttätig reversibel*. Ob das ein wünschbares Verhalten ist, dürfte eine andere Frage sein; im ungünstigsten Falle erfolgt anstelle einer bis zum Stillstand anhaltenden bedingungslosen Vollbremsung nur ein kurzes Verzögern des Zuges. In den Ausführungsformen gemäss Figuren 2 und 4 hingegen ist eine einmal ausgelöste Bremsung *irreversibel.* Anzumerken ist noch, dass die beiden erstgenannten Ausführungsformen *zerstörungsfrei* arbeiten, die beiden letztgenannten *nicht zerstörungs**frei*.

Die hier neu vorgeschlagene Sicherheitsvorrichtung hat demgegenüber wichtige Unterschiede. Die wesentlichen Komponenten arbeiten mit *bistabiler Lagerung* und *digitalem Verhalten,* die *Koppelung* zwischen Schocksensor und Schnellbremsvorrichtung ist indirekt (über einen Auslösemechanismus) und nur in eine Richtung wirksam (*rückkoppelungsfrei*), die Bremsauslösung ist irreversibel und arbeitet *zerstörungs**frei*. Die Erfindung betrifft eine Sicherheitsvorrichtung der eingangs genannten Art, bestehend im wesentlichen aus einem (Vertikal-)Schock-Sensor und einem Schnellbremsventil, das im Falle des Ansprechens der Vorrichtung sofort voll öffnet und in der angeschlossenen Druckluft-Hauptbremsleitung rasch einen vollständigen Druckabfall bewirkt.

Die Erfindung besteht darin, dass sich der Gewichtskörper nach Ueberwindung einer Rückhaltevorrichtung von der (oberen) Ruhelage ungehindert auf die (untere) Arbeitslage hin bewegen kann und auf dem Weg dorthin den Auslöser für die Schnellbremsvorrichtung betätigt, wobei Schocksensor, Auslösemechanismus und Schnellbremsvorrichtung konstruktiv und funktionell je selbständige Komponenten mit einseitig gerichteter Koppelung zur Nachbarkomponente darstellen, derart, dass der Schocksensor nur den Auslösemechanismus und dieser nur die Schnellbremsvorrichtung zu beeinflussen vermag, dass aber eine Beeinflussung in umgekehrter Richtung von der Schnellbremsvorrichtung auf den Auslösemechanismus oder von diesem auf den Schocksensor nicht möglich ist. Das Funktionieren der Sicherheitvorrichtung ist im übrigen nicht abhängig vom vorhandenen Druck in der Hauptbremsleitung.

Ist der Auslösemechanismus einmal betätigt, so gibt es kein Zurück mehr bis zum Stillstand des Zuges: das Schnellbremsventil öffnet sich (zerstörungsfrei) mit einem Schlag, und zwar vollständig über den vollen Leitungsquerschnitt, und es bleibt voll geöffnet, bis es nach dem Stillstand des Zuges manuell wieder zurückgestellt wird. Wie der Gewichtskörper mit einer Ruhe- und einer Arbeitslage hat daher auch das Schnellbremsventil eine bistabile oder «digitale» Charakteristik, es kennt nur «geschlossen» (= Ruhe- oder Schliesslage) und «offen» (= Arbeits- oder Oeffnungslage); «analoge» Zwischenstellungen wie etwa in Fig. 5 der vorne besprochenen Erfindung DE 1 455 229 sind nicht möglich. Für das Schnellbremsventil ist es dabei ohne Bedeutung, ob der Gewichtskörper nach dem Auslösen in der Arbeitslage verbleibt, oder ob er wegen der weiteren bis zum Stillstand des Zuges auftretenden Entgleisungsstösse noch ein oder mehrmals zwischen Arbeits- und Ruhelage hin- und hergeschleudert wird, und in welcher Lage er schliesslich zur Ruhe kommt. Ebenso unbedeutend ist nach dem Oeffnen des Schnellbremsventils das Verhalten der einzelnen Teile des Auslösemechanismus. Ist das Schnellbremsventil einmal geöffnet, findet die Zugsbremsung völlig unabhängig vom Verhalten der andern Vorrichtungskomponenten statt.

Gemäss einer Weiterausbildung der Erfindung ist die Sicherheitsvorrichtung so ausgebildet, dass sie ohne Eingriffe in die Wagenkonstruktion am Wagen an- und abgekuppelt werden kann, und zwar vorteilhafterweise an den Bremsschlauch-Halterungen, die sich bekannterweise an jedem Wagenende befinden. Eine Alternative für die Befestigung wäre die Halterung für das Zugschluss-Signal. Eine solche Positionierung der Vorrichtung führt dazu, dass die Verbindung zwischen Vorrichtung und der Druckluft-Hauptbremsleitung des Zuges direkt über die vorhandene, normierte Bremsschlauchkupplung hergestellt werden kann. Die Möglichkeit, das Gerät an jedem Wagen beliebig anhängen und auch wieder wegnehmen zu können ist besonders bedeutsam für ein Bahnunternehmen, auf dessen Schienennetz häufig Eisenbahnwagen fremder Bahnunternehmen verkehren. Für die Anwendung an den eigenen Eisenbahnwagen oder einer Auswahl davon, zum Beispiel an den Wagen permanent zusammengestellter Block-Pendelkompositionen, kann die Vorrichtung aber auch für den festen Einbau in die Wagen ausgeführt sein.

Bei einer besonders vorteilhaften Ausführungsform der Erfindung ist die den Gewichtskörper festhaltende Kraft, das heisst der AuslöseSchwellenwert, im am Wagen montierten Zustand von aussen einstellbar. Damit ist die Vorrichtung unverändert für alle Wagentypen auch bei unterschiedlichen Federungs- und Fahreigenschaften verwendbar und kann bei Bedarf insbesondere dem jeweiligen Beladungsgrad angepasst werden. Bei Wagen mit fest eingebauter Sicherheitsvorrichtung wird der Einstellhebel für den Auslöse-Schwellenwert zweckmässigerweise über ein Gestänge direkt mit dem am Wagen vorhandenen Handgriff für die beladungsabhängige Bremskrafteinstellung gekoppelt.

In Fig. 1 ist ein Ausführungsbeispiel einer erfindungsgemässen Sicherheitsvorrichtung schematisch dargestellt; eine Aussenansicht auf ein mögliches Ausführungsbeispiel ist in Fig. 2 abgebildet.

Die Vorrichtung ist im wesentlichen im (in Fig. 1 gestrichelt angedeuteten) Gehäuse G untergebracht. Die eine Hauptkomponente der Vorrichtung ist der Schocksensor, bestehend aus den Bauteilen 1 - 4, in Fig. 1 auf der linken Seite dargestellt. Mit 1 ist der vertikal aus einer oberen Ruhelage in eine untere Arbeitslage verschiebbare Gewichtskörper bezeichnet, der zum Beispiel in einer Führung oder auf einer Achse 1a gelagert ist. Unten am Gewichtskörper 1 ist eine Rückstellstange 1b angebracht, die in der Ruhelage des Gewichtskörpers 1 in der Bewegungsrichtung hinab bis zum äusseren Rand des Gehäuses G reicht und das dort vorhandene Loch von aussen abdeckt. Verschiebt sich der Gewichtskörper 1 infolge einer Entgleisung in die Arbeitslage und bleibt er dort nach dem Stillstand des Zuges liegen, ragt die Rückstellstange 1 b entsprechend aus dem Gehäuse heraus; sie und dadurch der Gewichtskörper 1 können in diesem Falle von Hand wieder in die Ruhelage zurückgeschoben werden. Der Gewichtskörper 1 wird in der Ruhelage von einer Rückhaltefeder 3, hier als Druckfeder in einer teleskopischen Schutzhülse 3a ausgebildet, festgehalten, und zwar indirekt über einen um die Achse 2a schwenkbaren Rückhaltehebel 2. Die Rückhaltefeder 3 ist am andern Ende in einem Schuh 3b gelagert, dessen Höhenlage von aussen mit einem Hebel 4a längs der Führung 4 verstellbar ist, womit sich der Anpressdruck des Rückhaltehebels 2 an den Gewichtskörper 1 verändern lässt. Damit kann die Ansprechempfindlichkeit der Vorrichtung der jeweiligen Wagen-Charakteristik (Federung, Wagengewicht / Beladungszustand) angepasst werden; bei einem schwach gefederten, leichten (leeren) Wagen ist der Anpressdruck höher einzustellen als bei einem gut gefederten, schweren (voll beladenen) Wagen. Anstelle der in dieser Ausführungsform vorgesehenen Hebelmechanik 2-4 kann auch eine andere Festhaltevorrichtung mit Schnappcharakteristik zum Einsatz gelangen, so etwa federnd gelagerte Bolzen oder Nocken oder Schnappfedern, die den Gewichtskörper mit einer definier- und regelbaren Kraft in der Ruhelage festhalten.

Der Auslösemechanismus, umfassend die wesentlichen Bauteile 5 - 7 und den optionalen Bauteil 8, ist in der Mitte von Fig. 1 dargestellt, die Schnellbremsvorrichtung mit den Bauteilen 9-12 auf der rechten Seite. In die Bewegungsbahn des Gewichtskörpers 1 ragt das freie Ende des um die Achse 5a schwenkbaren Auslösehebels 5. Zwischen der Unterkante des Gewichtskörpers 1 in Ruhelage und der Oberkante des Auslösehebels 5 liegt ein Abstand a, der so bemessen ist, dass die Unterkante des Gewichtskörpers 1 den Auslösehebel 5 in der Abwärtsbewegung frühestens dann berühren kann, wenn der Gewichtskörper 1 den Rückhaltehebel 2 bereits überwunden und somit freie Bahn zur unteren Arbeitslage hat. Zum Auslösemechanismus gehört nebst dem Auslösehebel 5 der in den Führungen 6a verschiebbare Sperriegel 6. An seinem linken Ende ist ein Mitnehmer 7 aufgesetzt, der in den Nocken 5b des Auslösehebels 5 eingreift. Der Sperriegel 6 wird durch die Rückstellfeder 6b nach rechts in seine Ruhelage gedrückt, wobei er über den Mitnehmer 7 und den Auslösehebel-Nocken 5b auch den Auslösehebel 5 in seiner (waagrechten) Ruhelage hält. Das rechte Ende des Sperriegels 6 ist abgeschrägt, derart, dass seine obere Längskante weiter nach rechts reicht als die Unterkante. Befindet sich der Sperriegel 6 in der Ruhelage, ragt die rechtsseitige Spitze des Sperriegels 6 in die Bewegungsbahn eines Nockens 12a an einer Ventilstange 12. Ist der Ventilstangen-Nocken 12a oberhalb des in Ruhelage befindlichen Sperriegels 6, so liegt er auf der Oberkante auf und jede Abwärtsbewegung der Ventilstange 12 ist blockiert. Ist der Ventilstangen-Nocken 12a unterhalb des Sperriegels 6, so ist es möglich, die Ventilstange 12 nach oben zu bewegen: der Nocken 12a stösst dabei zuerst an die Schräge, drückt dann im Vorbeigleiten den Sperriegel 6 zunehmend nach links, bis der Nocken 12a passiert hat; sobald der Nocken 12a eine Lage oberhalb des Sperriegels 6 erreicht hat, schnellt dieser mittels der Kraft der Rückstellfeder 6b wieder nach rechts in seine Ruhelage zurück.

Die Ventilstange 12 ist am oberen Ende mit dem Schnellbremsventil 9 verbunden, das sich im Ventilgehäuse 9a befindet. Die Ventilstange 12 ist mit einer starken Ventilfeder 11 versehen (in der Zeichnung als Druckfeder ausgebildet), welche die Ventilstange 12 nach unten treibt, sobald der Sperriegel 6 die Bewegungsbahn freigibt. Bei dieser Abwärtsbewegung öffnet die Ventilstange 12 das Schnellbremsventil 9. Zur Ventilfeder 11 ist zu sagen, dass ihre Stärke so zu bemessen ist, dass sie mit Sicherheit ein rasches Oeffnen des Schnellbremsventils 9 zu gewährleisten vermag; die effektive Bemessung hängt von der tatsächlich verwendeten Konstruktion des (in der Zeichnung nur schematisch angedeuteten) Schnellbremsventils ab. Würde man das Schnellbremsventil 9 so ausführen, wie es in Fig. 1 dargestellt ist, so könnte die Federkraft sehr gering gehalten werden oder ganz entfallen (geht man von einem normalen Bremsleitungsdruck von 5 bar und einer Ventiloberfläche von etwa 12 cm aus, so würde allein die pneumatische Kraft etwa 60 kg ausmachen. In diesem Falle müsste aber, um in der Ruhelage die Dichtheit des Ventils sicherzustellen, zwischen oberem Ende der Ventilstange 12 und dem Ventilteller von Ventil 9 eine Ausgleichsfeder mit mindestens 100 kg Anpresskraft liegen; mit diesem Druck presst dann aber auch der Ventilstangen-Nocken 12a auf den Sperriegel 6! Zudem würde eine direkte manuelle Rückstellung der Ventilstange kaum mehr möglich sein.) Erfindungsgemäss soll aber die Sicherheitsvorrichtung unabhängig vom Druck der Bremsluft funktionieren, und es soll auch möglich sein, als Schnellbremsventil 9 zum Beispiel ein indirekt wirkendes Tellerventil oder aber ein übliches Drehventil einzusetzen, und dann braucht es zwingend eine entsprechend kräftige Ventilfeder 11.

Das Ventilgehäuse 9a ist über die vorrichtungseigene Druckluftleitung 16 mit der Druckluft-Hauptbremsleitung des Zuges zu verbinden, einerseits über die Leitungskupplung 13 mit dem Bremsschlauch des mit der Vorrichtung versehenen Wagens, andererseits über den vorrichtungseigenen flexiblen Druckluftschlauch 17, der beispielsweise wie in Fig. 2 abgebildet in einer Spiralfeder-Halterung 18 angeordnet sein könnte, über die übliche Schlauchkupplung 15 mit dem Bremsschlauch des benachbarten Wagens oder der Lokomotive. Ist die Vorrichtung am Ende eines Zuges angebracht, so ist der Absperrhahn 14 mit dem Handgriff 14a zu schliessen, und der unbenützte Verbindungsschlauch 17 kann mit der Schlauchkupplung 15 an der vorrichtungseigenen Bremsschlauchhalterung 19 eingehängt werden. Mit dem Anschluss der Vorrichtung über die an jedem Wagen vorhandenen Bremsschlauch-Kupplungen erhält die Erfindung den bereits erwähnten besonderen Vorteil, dass sie ohne konstruktive Eingriffe in die Bremsanlage des Wagens eingesetzt werden kann. Das Gehäuse G ist hierzu mit geeigneten, wieder lösbaren Befestigungsmitteln oder einer geeigneten Schnellkupplungsvorrichtung in der Nähe der Bremsschläuche des Wagens anzukuppeln, mit Vorteil an der üblichen wageneigenen Bremsschlauchhalterung oder aber an der Oese für das Zugschluss-Signal. Soll die Vorrichtung permanent in einen Wagen eingebaut werden, so kann anstelle der Bauteile 13 - 16 für die Bremsdruckluft ein einfacher Rohrstutzen vom Ventilgehäuse 9a nach aussen geführt und dort mit der Druckluft-Hauptbremsleitung bleibend verbunden werden. In diesem Falle ist der Verstellmechanismus 4 für die Ansprechempfindlichkeit der Vorrichtung über ein Gestänge direkt mit dem am Eisenbahnwagen, in der Regel in Wagenmitte, vorhandenen Handgriff für die beladungsabhängige Bremskrafteinstellung zu verbinden. (Dank der modularen Konstruktionsweise der Vorrichtung ist es im übrigen ohne weiteres möglich, bei permanent eingebauten Geräten die eigentliche Schnellbremsvorrichtung 9-12 doppelt auszuführen und durch ein und denselben Auslösemechanismus auszulösen. Die Ventilkammer 9a der parallel geschalteten zweiten Schnellbremsvorrichtung 9-12 kann dann mit dem Bremsventil des Wagens verbunden und zur Entlüftung der Wagenbremsen einschliesslich Hilfsluftbehälter benützt werden, womit der an sich bekannte Effekt erreicht wird, dass der entgleiste Wagen selbst ungebremst bleibt und nur die übrigen Wagen des Zuges gebremst werden. Der entgleiste Wagen hat ja durch die Entgleisung ohnehin einen grösseren Roll- oder Reibungswiderstand zu überwinden; wird er zusätzlich gebremst, verstärkt sich das Zerren der vorderen und das Nachstossen der hinteren Wagen, was ungünstig ist - vgl. dazu die deutsche Patentschrift 277 283).

Im Auslass 9b, der wie das ganze pneumatische System der Vorrichtung mindestens den üblichen Bremsleitungs-Querschnitt aufweisen muss, kann vorgesehen werden, dass die austretende Bremsdruckluft eine Sirene 10 durchströmt und dabei in an sich bekannter Weise einen Pfeifton erzeugt, der die akustische Ortung der aktiv gewordenen Sicherheitseinrichtung ermöglicht. Ferner ist eine optische Anzeige der aktiv gewordenen Vorrichtung dadurch gebildet, dass das untere Ende 12b der Ventilstange 12 in der Oeffnungslage des Schnellbremsventils 9 aus dem Gehäuseboden herausragt und durch eine auffallende Farbgebung (Signalfarben, Leuchtfarben, eventuell fluoreszierende Beschichtung für die Reflexion des Lichts von Taschenlampen) leicht von aussen erkennbar ist. Durch manuelles Einschieben der Ventilstange 12 lässt sich dann die Schnellbremsvorrichtung 9-12 wieder zurückstellen.

Wenn, vor allem in permanent zusammengestellten Blockzügen, eine elektrische drahtgebundene oder drahtlose Signalverbindung von den Wagen zur Lokomotive vorhanden ist, kann ein durch den Auslösehebel 5 beziehungsweise den Auslösehebel-Nocken 5b betätigter elektrischer Schalter 8 vorgesehen sein, dessen Signalleitungen zu einer an der Gehäusewand G montierten (in den Zeichnungen nicht dargestellten) Steckdose geführt sind; an dieser Steckdose kann über einen Stecker die Verbindung mit der am Zug vorhandenen Signalleitung hergestellt werden. Damit kann der Lokomotivführer über das Auslösen eines Entgleisungsdetektors sofort informiert werden.

Die beschriebene Sicherheitsvorrichtung funktioniert wie folgt: Sobald vertikale Stösse auftreten, die wesentlich über das für den normalen Fahrbetrieb übliche Mass hinausgehen, überwindet der Gewichtskörper 1 aufgrund der auf ihn einwirkenden Beschleunigungskräfte die Kraft der Rückhaltefeder 3 und drückt den Rückhaltehebel 2 so zur Seite, dass der Gewichtskörper 1 freie Bahn nach unten hat. Auf diesem Weg reisst er das freie Ende des Auslösehebels 5 nach unten. Durch die Schwenkbewegung des Auslösehebels 5 betätigt der Nocken 5b des Auslösehebels 5 einerseits den elektrischen Schalter 8, andererseits zieht er über den Mitnehmerbolzen 7 den Sperriegel 6 nach links aus seiner Sperrlage. Damit wird die bisher über den Nocken 12a in ihrer oberen Ruhelage blockierte Ventilstange 12 freigegeben, und sie wird durch die Kraft der Feder 11 nach unten gestossen. Mit der Ventilstange 12 wird auch das Schnellbremsventil 9 geöffnet, und die Bremsluft kann ungehindert durch die Sirene 10 ins Freie entweichen. Mit dem Abfallen des Drucks in der Hauptbremsleitung des Zuges wird schliesslich der Bremsvorgang beim ganzen Zug aktiviert.

Für die Rückstellung der Sicherheitsvorrichtung wird zum einen die Rückstellstange 1b ins Gehäuse G zurückgeschoben, wodurch der Gewichtskörper 1 in die Ruhelage gelangt, und zum andern ist die Verlängerung 12b der Ventilstange 12 zurückzuschieben, wodurch das Schnellbremsventil 9 geschlossen wird und der Ventilstangen-Nocken 12a wieder oberhalb des Sperriegels 6 einrastet. Damit ist die Sicherheitsvorrichtung wieder einsatzbereit.

## Patentansprüche

1. Entgleisungsdetektor zur Schnellbremsauslösung bei entgleisten Eisenbahnwagen, der am zu überwachenden Wagens fest oder an- und abkuppelbar zu montieren ist und dessen Aufgabe es ist, auf vertikale Stösse zu reagieren, dadurch gekennzeichnet,
- dass er über einen Vertikalschock-Sensor (1-4) verfügt mit einem vertikal verschiebbaren Gewichtskörper (1) und mit einer Festhaltevorrichtung (2-4) mit einstellbarer Festhaltekraft, die den Gewichtskörper (1) solange in einer oberen Endlage festhält, bis dessen Trägheitskräfte grösser werden als die Festhaltekräfte, um dann den Weg zur unteren Endlage freizugeben,
- dass er einen Uebertragungsmechanismus (5-7) besitzt vom Schocksensor (1-4) zum nachstehend erwähnten Schnellbremsventil (9-12),
- dass er einen Anschluss (13-15) an die Druckluft-Hauptbremsleitung des Zuges aufweist,
- dass er über ein Schnellbremsventil (9-12) verfügt, das in Ruhelage die Auslassöffnung (10) für die Bremsdruckluft verschliesst, das aber beim Ansprechen des Schocksensors (1-4) voll öffnet, um die Druckluft aus der Hauptbremsleitung in die umgebende Atmosphäre entweichen zu lassen und so die Schnellbremsung des Zuges auszulösen.

2. Vorrichtung nach Anspruch 1, dadurch gekennzeichnet, dass der Gewichtskörper (1) durch einen schwenkbaren, gefederten Hebel (2) mit Schnappcharakteristik in der Ruhelage zurückgehalten wird, wobei die Anpresskraft der Feder (3) von aussen im am Wagen montierten Zustand verstellbar ist, um sie der jeweiligen Wagen-Charakteristik anpassen zu können.

3. Vorrichtung nach Anspruch 1, dadurch gekennzeichnet, dass ein mit der Druckluft-Hauptbremsleitung zu verbindendes Druckluftventil (9) mit einer Ventilstange (12) direkt oder indirekt verbunden ist, wobei die Ventilstange (12) einerseits unter der Kraft einer Oeffnungsfeder (11) steht, welche die Ventilstange (12) in Oeffnungslage zu verschieben und damit das Druckluftventil (9) zu öffnen vermag, wobei sie andererseits mit einem Sperriegel (6) zusammenwirkt, der in Sperrlage eine Bewegung der Ventilstange ( 12) in Oeffnungslage verhindert, der aber durch einen schwenkbaren Auslösehebel (5) aus der Sperrlage herausgezogen werden kann, wobei das freie Ende des Auslösehebels (5) in die Bewegungsbahn des Gewichtskörpers(1) ragt.

4. Vorrichtung nach Anspruch 3, dadurch gekennzeichnet, dass das freie Ende des Auslösehebels (5) einen solchen Abstand (a) vom Gewichtskörper (1) in dessen Ruhelage hat, dass es von diesem erst betätigt wird, wenn er die Rückhaltekraft des gefederten Hebels (2) überwunden hat und sich im freien Fall befindet.

5. Vorrichtung nach Anspruch 3, dadurch gekennzeichnet, dass das untere Ende (12b) der Ventilstange (12) in ihrer Oeffnungslage aus der Vorrichtung herausragt, um die aktiv gewordene Vorrichtung anzuzeigen.

6. Vorrichtung nach Anspruch 1, gekennzeichnet durch Mittel, um sie an der Bremsschlauch-Halterung des Wagens, an der Halterung für das Zugschlussignal oder an einem andern geeigneten Ort ohne konstruktive Eingriffe am zu überwachenden Wagen an- und abkuppeln zu können.

7. Vorrichtung nach Anspruch 6, gekennzeichnet durch eine übliche Schlauchkupplung (13) zum Anschluss der Vorrichtung an das freie Bremsschlauch-Ende des betreffenden Wagens und dadurch an die Zugs-Bremsleitung, ohne dass ein konstruktiver Eingriff am Wagen erforderlich ist.

8. Vorrichtung nach Anspruch 1, gekennzeichnet durch einen Rohrstutzen zur permanenten Verbindung des Druckluftventil-Gehäuses (9a) mit der Hauptbremsleitung des Zuges des Wagens, falls die Vorrichtung dauerhaft am Wagen angebracht werden soll.

9. Vorrichtung nach Anspruch 3, gekennzeichnet durch einen mit dem Auslösehebel (5) zusammenwirkenden elektrischen Schalter (8) und eine Anschluss-Steckdose zur steckbaren Verbindung mit einer allenfalls vorhandenen elektrischen Zugs-Signalleitung oder mit einem drahtlosen elektrischen Signalgeber.
